# EUROPEAN PATENT APPLICATION

(11) **EP 3 971 457 A1**
(43) Date of publication of application: **23.03.2022**
(21) Application number: 21197158.5
(22) Date of filing: 16.09.2021
(51) Int. Cl.: F16L 1/18, B63B 35/03, F16L 1/23, F16L 1/235, F16L 1/20

(54) **METHOD AND SYSTEM FOR JOINING AND DEPLOYING PIPE**

(30) Priority: 16.09.2020 NL 2026487
(71) Applicant: Royal IHC Limited, Stocksfield Northumberland NE43 7TN (GB)
(72) Inventor: SMITH, Michael James, Stocksfield, NE43 7TN (GB); GETHING, Kathleen Margaret, Stocksfield, NE43 7TN (GB)
(74) Representative: HGF

(57) **Abstract**

A method and system for continuously joining and deploying pipe from a moving vessel is disclosed. The method comprises the steps of (a) providing an S-lay system comprising a guiding system mounted on a vessel; and a joining system moveable along the guiding system in a direction substantially corresponding to the firing line of a pipe string; (b) providing an additional pipe section to be joined to an end of a deployed pipe string; (c) actuating the joining system to hold an end of the deployed pipe string and the additional pipe string; and (d) as the vessel moves in a laying direction: moving the joining system along the guiding system in a direction opposite to the laying direction; operating the joining system to join the additional pipe section to the deployed pipe string to form an extended pipe string as the joining system moves; and deploying the extended pipe string from the vessel.

## Description

The present invention relates to a method and system for continuously joining and deploying pipe from a moving vessel. In particular, but not exclusively, the present invention relates to a method and system for continuously joining and deploying pipe from a moving vessel during an S-lay operation.

Traditionally, sub-sea pipelines may be deployed from a vessel and onto the sea bed as a continuous pipe length using various techniques. In "S-lay" systems, pipe sections are sequentially added to a pipeline and deployed from the vessel stern. Typically, in S-lay operations the addition of pipe sections occurs with the vessel stationary. For example, the pipe sections are brought adjacent to the deployed pipeline and, while stationary, the pipe section is secured to the deployed pipeline by welding. The vessel then moves forward by the length of the additional pipe section to deploy the new pipe section (as part of the pipeline) from the stern of the vessel. Specifically, as the vessel moves forward the new pipe section is eased from the vessel by the tension in the pipeline catenary, which is fixed at the seabed. The process is then repeated to build the pipeline to the required length. The welded pipe is thus gradually built, and fed into the sea water, and will lay on the seabed or in a trench in a predetermined location. The pipe may be used for transporting production fluids such as oil, gas and water along the seabed, for example from a production platform to an on-shore location.

This S-lay technique can be used to lay pipeline at shallow or deep water depths, of typically up to 1000m. Typically the pipe diameter may range from 5 to 36 inch (12.7 to 91.44 cm). The pipe section typically may be 12 m in length, though the pipe sections may be pre-welded in sets of 2 x 12m lengths (so called double pipe joints, of 24 m), or 3 x 12m lengths (so called triple joints, of 36 m) etc.

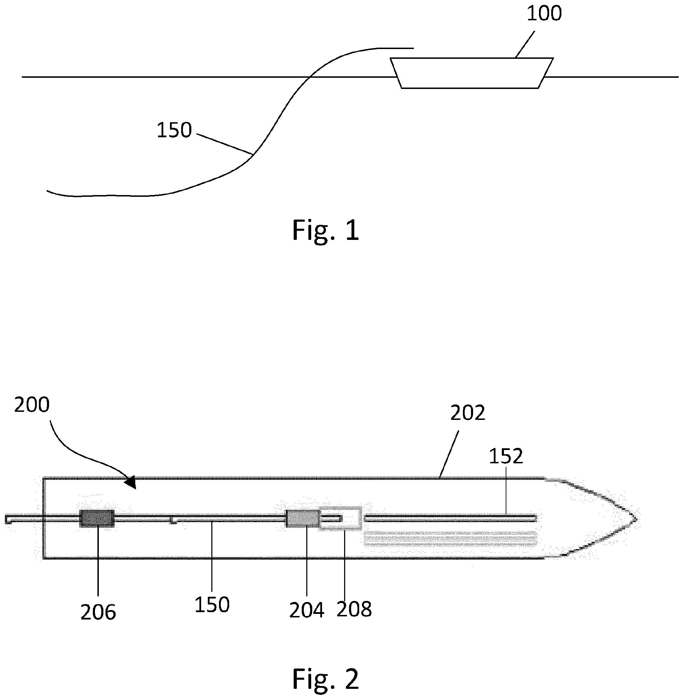

As shown in Figure 1, the pipeline 150 deployed from vessel 100 follows the shape of a letter "S".

There are a number of inherent difficulties in designing effective S-lay systems. For example, during the S-lay operation, the motion of the vessel must be in sync with the lay or accommodated within the system, such that the tension in the pipe is maintained so as to prevent over- or under-tension in the pipeline. For fast start-stops, the power required for the vessel is high.

In addition, in rough waters the vessel may surge. During a surge event the pipeline is pulled or pushed by the vessel. To maintain the pipeline at a required tension, S-lay systems typically use tensioners to pay-out/in the pipeline in response to surge events to help maintain the pipeline tension (i.e. to render the pipeline). Such tensioners are static on the vessel which interferes with pipeline production equipment if it is accommodating large vessel movements and they can be expensive.

Moreover, there is often a number of movable pipelaying or support components moving along the firing line during pipelay operations. It can be complex to ensure such components (and the pipeline itself) can move along the firing line uninterrupted.

S-lay systems typically include a guiding member or stinger which is often partially built into the vessel with a portion that protrudes from the vessel. It is used to support the pipeline in an arc as it leaves the vessel to reduce pipe stresses and stop the pipe buckling. The stinger structure which protrudes beyond the vessel is cantilevered from the vessel and in operation will often be partially submerged. When not in use, if the stinger remains partially submerged, transiting or inoperable sea states will become a major factor in the design for stinger strength. It also impacts the vessel characteristics, and manoeuvrability. In some current stinger designs, the stinger structure is raised about one or more pivots to lift it above the water. This reduces drag and some of the environmental loading onto the stinger. However, the accelerations acting on the stinger due to vessel motions will still be high, as the distance to the raised stinger from the centre of rotation of the vessel is relatively large.

It would be useful to provide an S-lay system, or sub-systems thereof, that overcome some, or all, of the problems described above.

WO 2007/000609 discloses a pipe laying vessel and methods of operation thereof. US 3775,987 discloses a method and apparatus for laying a submergible elongate structure. WO 2012/161579 discloses a pipe-laying system for laying pipes in water.

According to a first aspect of the invention, there is provided a method of continuously joining and deploying pipe from a moving vessel, the method comprising the steps of:
(a) providing an S-lay system comprising:
   a guiding system mounted on a vessel;
   a joining system moveable along the guiding system in a direction substantially corresponding to the firing line of a pipe string;
(b) providing an additional pipe section to be joined to an end of a deployed pipe string;
(c) actuating the joining system to hold an end of the deployed pipe string and the additional pipe string; and
(d) as the vessel moves in a laying direction:
   moving the joining system along the guiding system in a direction opposite to the laying direction;
   operating the joining system to join the additional pipe section to the deployed pipe string to form an extended pipe string as the joining system moves; and
   deploying the extended pipe string from the vessel.

The use of a movable joining system (or production equipment) allows the joining and deployment of the pipe string (i.e. the lay cycle of the pipe string) to be continued during vessel motion. Put another way there is no need to stop the vessel during attachment and subsequent deployment of the pipeline. In particular, the joining system has a passive motion that in effect decouples the deployment speed of the pipeline from the vessel speed. For example, the joining system can move between ends of additional pipe sections to allow each pipe section to be joined to a pipe string at a first end and then be joined to a subsequent pipe section at a second end.

Aptly, the joining system is moved along the guiding system to maintain the end of the deployed pipe string and the additional pipe string in a substantially stationary position as the vessel moves in the laying direction. This helps ensure the pipe is deployed at an optimum rate, while substantially maintaining the tension in the deployed pipe string at an acceptable level.

Aptly, the method comprises repeating steps (b) to (d) to build and deploy a pipe string of a desired length.

Aptly, the method further comprises the steps of:
(e) providing a further additional pipe section to be joined to an end of the extended pipe string;
(f) moving the joining system along the guiding system in the laying direction towards the further additional pipe string;
(g) actuating the joining system to hold an end of the extended pipe string and the further additional pipe string; and
(h) as the vessel moves in a laying direction:
   moving the joining system along the guiding system in a direction opposite to the laying direction;
   operating the joining system to join the further additional pipe section to the extended pipe string to form a further extended pipe string as the joining system moves; and
   deploying the further extended pipe string from the vessel.

Aptly, the joining system is moveable along the guiding system by a stroke length, the stroke length being substantially equal to or greater than the length of the additional pipe section. When the joining process is performed with the production equipment effectively moving aft along the deck (or the vessel moving forward) with a stroke length that is at least as long as the length of the additional pipe section, the lay process can be maintained with a constant, optimal, vessel motion.

Aptly, the joining system comprises a joining clamp, wherein step (c) includes clamping an end of the deployed pipe string and the additional pipe section with the joining clamp. Aptly, the joining system further comprises a work platform.

Aptly, the speed of the vessel in the laying direction is such that during the time taken to join the additional pipe section to the deployed pipe string and return the joining system to the beginning of its stroke, the vessel has travelled a distance substantially equal to the length of the additional pipe section. In particular, the speed of the vessel is slightly below 1 pipe length per join time (allowing time to get the production equipment back to the front of its stroke ready to perform the next join). This is an optimum speed for continuous joining and deployment of pipeline. The vessel speed may be adjusted manually according to the requirements of the laying operations.

Aptly, the S-lay system further comprises supporting means for supporting the pipe string during laying operations.

Aptly, the supporting means is a tensioner.

Aptly, the supporting means comprises:
a first clamp; and
a second clamp, wherein the first and second clamps are moveable along the guiding system in a direction substantially corresponding to the firing line of a pipe string.

In use, the clamps pass the pipe string between themselves such that the pipe string is support at all times during the continuous joining and deployment of the pipeline without having to stop or slow the vessel speed.

Aptly, the first clamp is coupled to and movable with the joining system. This helps the joining process to take place in an efficient manner while the vessel moves. That is, both the first clamp and the joining system can be kept stationary while the vessel moves. Aptly, the method further comprises the steps of:
actuating the first clamp to clamp an end of the deployed pipe string to support the deployed pipe string during the joining process, wherein as the vessel moves in a laying direction the first clamp is moved along the guiding system in a direction opposite to the laying direction.

This helps maintain the end of the deployed pipe string in a substantially stationary position and hence ensures the tension in the deployed pipe string remains relatively constant. As the first clamp moves in the direction opposite to the laying direction the pipe string is 'further deployed' pipe string is further deployed from the vessel (that is, portions of the pipe string positioned on the deck of the vessel are eased from the vessel as it moves forward).

Aptly, the first clamp is moved along the guiding system so as to maintain the end of the deployed pipe string and the end of the additional pipe section in a substantially stationary position.

Aptly, the method further comprises the steps of:
clamping the extended pipe string with the second clamp and releasing the extended pipe string from the first clamp, wherein as the vessel moves in the laying direction the second clamp is moved along the guiding system in a direction opposite to the laying direction.

This helps maintain the end of the deployed pipe string in a substantially stationary position and hence ensures the tension in the deployed pipes string remains relatively constant. The extended pipe string is deployed from the vessel as the second clamp is moved in the direction opposite to the laying direction. Movement of the second clamp allows the pipe string to be deployed as the vessel moves forward and also allows the first clamp to reset to maintain a continuous laying operation.

Aptly, the second clamp is moved along the guiding system so as to maintain the end of the deployed pipe string and the end of the additional pipe section in a substantially stationary position.

Aptly, the step of clamping the extended pipe string with the second clamp includes the steps of:
moving the second clamp towards an end of the extended pipe string; and
actuating the second clamp to clamp the extended pipe string.

Aptly, the system further comprises:
a first winch system comprising a constant tension winch coupled to the first and second clamps, the first winch system being configured to control the position of the first and second clamps with respect to the guiding system; and
a second winch system coupled to the first and second clamps, the second winch system being configured to control the relative position of the first and second clamps on the guiding system; and
   wherein the method further comprises the step of:
controlling the movement of the first and second clamps using the first winch system and the second winch system.

Aptly, the first winch system and/or second winch system correspond to the first winch system and second winch system, respectively, of the fourth aspect of the present invention. As such, the first and second winch systems may be used as a way of controlling the clamps during laying operations and/or maintaining the tension in the pipeline during surge events.

According to a second aspect of the invention, there is provided a system for continuously joining and deploying pipe from a moving vessel, the system comprising:
a guiding system mounted on a vessel;
a joining system moveable along the guiding system in a direction substantially corresponding to the firing line of a pipe string;
wherein as the vessel moves in a laying direction the joining system is configured to:
move along the guiding system in a direction opposite to the laying direction; and hold an end of the deployed pipe string and the additional pipe string during a joining operation whereby the deployed pipe string is joined to an additional pipe section.

Aptly, the joining system is moveable along the guiding system by a stroke length, the stroke length being substantially equal to or greater than the length of the additional pipe section.

Aptly, the joining system comprises a joining clamp configured to clamp an end of the deployed pipe string and an end of the additional pipe section.

Aptly, the joining system further comprises a work platform.

Aptly, the speed of the vessel in the laying direction is such that during the time taken to join the additional pipe section to the deployed pipe string and return the joining system to the beginning of its stroke, the vessel has travelled a distance substantially equal to the length of the additional pipe section.

Aptly, the S-lay system further comprises supporting means for supporting the pipe string during laying operations.

Aptly, the supporting means comprises:
a first clamp; and
a second clamp, wherein the first and second clamps are moveable along the guiding system in a direction substantially corresponding to the firing line of a pipe string.

Aptly, the first clamp is coupled to and movable with the joining system.

Aptly, the system further comprises:
a first winch system comprising a constant tension winch coupled to the first and second clamps, the first winch system being configured to control the position of the first and second clamps with respect to the guiding system; and
a second winch system coupled to the first and second clamps, the second winch system being configured to control the relative position of the first and second clamps on the guiding system; and
wherein the method further comprises the step of:
controlling the movement of the first and second clamps using the first winch system and the second winch system.

According to a third aspect of the present invention, there is provided a vessel for deploying pipe in transit / while moving, the vessel comprising a system of the second aspect of the present invention.

According to a fourth aspect of the present invention, there is provided a system for maintaining tension in an S-lay pipeline, the system comprising:
a guiding system configured to be mounted on a vessel;
a first clamp;
a second clamp, the first and second clamps being configured to support a pipe string during laying operations, wherein the first and second clamps are moveable along the guiding system in a direction substantially corresponding to the firing line of a pipe string;
a first winch system comprising a constant tension winch coupled to the first and second clamps, the first winch system being configured to control the position of the first and second clamps with respect to the guiding system; and a second winch system coupled to the first and second clamps, the second winch system being configured to control the relative position of the first and second clamps on the guiding system.

Aptly, the first and second clamps are positioned fore and aft respectively.

Aptly, the first winch system is configured to:
apply a force to the second clamp in a first direction; and
apply a force to the first clamp in a second direction, opposed to the first direction.

Aptly, the first and second directions are aft and forward directions respectively.

Aptly, the first winch system is configured to render both the first and second clamp simultaneously during a surge event.

Aptly, the first winch system further comprises:
a floating sheave, attached to the first clamp;
a first fixed sheave;
a second fixed sheave; and
a winching element, attached to the constant tension winch and to the second clamp;
wherein the winching element is routed from the constant tension winch, around each of the floating sheave, the first fixed sheave and the second fixed sheave to the second clamp.

Aptly, the second winching system is configured so that during a surge event, the spacing between the first clamp and the second clamp is maintained passively.

Aptly, the second winch system comprises a second winch coupled to the first and second clamps, the second winch being a length controlled winch.

Aptly, the second winch system further comprises:
first and second floating sheaves;
wherein the first clamp is attached to the first floating sheave and the second clamp is attached to the second floating sheave;
a fixed point; and
a winching element, attached to the winch of the second winch system and to the fixed point;
wherein the winching element is routed from the winch of the second winch system, around the second floating sheave, around the first floating sheave and to the fixed point.

Aptly, in a clamping configuration the first clamp is configured to clamp an end of a deployed pipe string, wherein in the clamping configuration the first clamp is configured to move along the guiding system in response to vessel movement in a laying direction. Aptly, in a clamping configuration the second clamp is configured to move along the guiding system in response to vessel movement in a laying direction.

Aptly, the first clamp and second clamp correspond to the first clamp and second clamp of the second aspect of the present invention.

According to fifth aspect of the present invention, there is provided a vessel for deploying pipe in transit / while moving, the vessel comprising a system of the fourth aspect of the present invention.

Aptly, the first and second winch systems are mounted on the vessel. This is beneficial for packaging and service routing.

According to a sixth aspect of the present invention, there is provided a method of maintaining tension in an S-lay pipeline, the method comprising:
providing a system according to the fourth aspect of the present invention, wherein the first and/or second clamp is supporting a pipe string: and
in response to a surge event rendering both the first and second clamp to substantially maintain the tension in the pipe string.

According to a seventh aspect of the present invention, there is provided a system for deploying pipe from a vessel, the system comprising:
a guiding system configured to be mounted on the vessel; and
a guiding member for guiding a pipe string during deployment into an S-lay configuration, wherein the guiding member is movable along the guiding system between:
   a first, operational, position; and
   a second, retracted, position in which the guiding member is substantially retracted onto the deck of the vessel.

Aptly, in the first, operational, position the guiding member extends outwardly from the stern of the vessel.

Aptly, in the first, operational, position the guiding member extends outwardly from the stern of the vessel by a distance of from about 15m to about 50m.

Aptly, the guiding member is a stinger.

Aptly, the guiding member has a radius of curvature so as to provide a gradual bend to a pipe string during deployment.

Aptly, the guiding member has a radius of curvature of from about 100m to about 250m, more aptly from about 150m to about 180m.

Aptly, the guiding member comprises a body portion having a plurality of sections connected in series.

Aptly, the sections are angled with respect to one another so as to provide the radius of curvature of the guiding member.

Aptly, each section is rotatably coupled to adjacent sections to allow relative rotation therebetween.

Aptly, the system further comprises a retraction system coupled to the guiding member, wherein the retraction system is configured to move the guiding member between the operational and retracted positions.

Aptly, the retraction system includes a winch system and/or at least one travelling clamp. Aptly, the system further comprises:
a first clamp and a second clamp, the first and second clamps being configured to support a pipe string during laying operations, wherein the first and second clamps are moveable along the guiding system in a direction substantially corresponding to the firing line of a pipe string.

Aptly, the first clamp and second clamp correspond to the first clamp and second clamp of the second aspect of the present invention.

According to an eighth aspect of the present invention, there is provided a vessel for deploying pipe, the vessel comprising a system of the seventh aspect of the present invention.

According to a ninth aspect of the present invention, there is provided a method of deploying pipe from a vessel, the method comprising the steps of:
providing a system comprising:
   a guiding system configured to be mounted on the vessel; and
   a guiding member for guiding a pipe string during deployment from a vessel;
positioning the guiding member in a first, operational position;
deploying pipe from the vessel, with the deployed pipe being guided into an S-lay configuration by the guiding member;
ceasing deployment of pipe from the vessel; and
moving the guiding member along the guiding system to a second, retracted, position in which the guiding member is substantially retracted onto the deck of the vessel.

### FOLDABLE ROLLERS

According to a tenth aspect of the present invention, there is provided a roller support for supporting pipe during a pipelaying operation, the roller support comprising:
a body portion configured to be mounted on the deck of a vessel or on a guiding system mounted on the deck of the vessel; and
a roller member coupled to the body portion;
the roller support having:
   a first, operational, position in which the roller member is positioned in the firing line of a pipe to be laid; and
   a second, retracted, position in which the roller member is positioned away from the firing line;
the roller support further comprising an engagement member extending from the body portion, wherein an applied force to the engagement member causes the roller support to move from its first, operational, position to its second, retracted, position.

Aptly, the engagement member is configured to engage with a corresponding engagement member mounted on a pipelaying component movable along the firing line, wherein engagement between the engagement member of the roller support and the engagement member of the pipelaying component causes the roller support to move from its first, operational, position to its second, retracted, position.

Aptly, the body portion is configured to be pivotally mounted on the deck of the vessel or the guiding system mounted on the deck of the vessel, wherein the applied force to the engagement member causes the body portion to pivot with respect to the deck of the vessel or the guiding system moving the roller support from its first, operational, position to its second, retracted, position.

Aptly, the engagement member is coupled to the body portion via a support member, the support member having:
a first, locking, configuration, in which the body portion is locked in a first position corresponding to the first, operational, position of the roller support; and
a second, folded, configuration, in which the body portion is able to rotate.

Aptly, the support member is biased towards the first, locking, configuration.

Aptly, the support member comprises first and second segments, the first and second segments being pivotally coupled, wherein the applied force to the engagement member causes a pivoting movement between the first and second segments, taking the support member from the first locking configuration to the second, folded, configuration.

Aptly, the roller support includes locking means configured to lock the roller support in the second, retracted, position.

According to an eleventh aspect of the present invention, there is provided a travelling clamp for use during pipelaying operations, the travelling clamp considering:
a clamp body; and
an engagement member extending from the clamp body, wherein the engagement member is configured to engage with a corresponding engagement member mounted on a roller support positioned within the firing line.

According to a twelfth aspect of the present invention, there is provided a system for deploying pipe from a vessel, the system comprising:
a guiding system configured to be mounted on a vessel;
at least one roller support of the tenth aspect of the present invention;
at least one clamp, the at least one clamp being configured to support a pipe string during laying operations, wherein the at least one clamp is moveable along the guiding system in a direction substantially corresponding to the firing line of a pipe string, wherein the at least one clamp comprises
   a clamp body; and
   an engagement member extending from the clamp body;
wherein the engagement member of the at least one clamp is configured to engage with the engagement member of the roller support positioned within the firing line causing the roller support to move from its first, operational, position to its second, retracted, position.

Aptly, the at least one clamp corresponds to the first clamp and/or second clamp of the second aspect of the present invention.

According to a thirteenth aspect of the present invention, there is provided a vessel for deploying pipe, the vessel comprising a system of the twelfth aspect of the present invention.

According to a fourteenth aspect of the present invention, there is provided a method of deploying pipe from a vessel, the method comprising the steps of:
providing an S-lay system according to the twelfth aspect of the present invention; traversing the at least one clamp along the guiding system as part of a laying operation;
moving the at least one roller support from the first, operational, position to the second, retracted, position, to allow the at least one clamp to move past the at least one roller support, wherein the at least one roller support is moved from its first, operational, position to its second, retracted, position through engagement between the engagement member of the at least one clamp and the engagement member of the at least one roller support.

Aptly, the method further comprises the step of returning the at least one roller support to the first, operational, position once the at least one clamp has moved past the at least one roller support.

Aptly, the above described aspects can be combined or used together as part of an S-lay system.

As used herein, 'a vessel' may refer to an S-lay vessel (that is, a vessel specifically configured for conducting S-lay operations) or a vessel of opportunity (that is, a vessel intended for another purpose utilised for conducting S-lay operations). In the latter case, the vessel may be a generic offshore vessel. It is noted that aspects of the present invention (for example the continuous laying process) allow the S-lay operations to be carried out on a relatively small vessel (that is smaller than a typical S-lay vessel).

As used herein, a 'pipe string' refers to a continuous collection of connected pipe sections for use as a pipeline, in particular for an S-lay operation. In general a 'pipe string' as described herein refers to a deployed pipe string - that is, a pipe string that extends from a vessel in an S-lay configuration. However, it would be understood that a portion of the deployed pipe string may remain present on the deck of the vessel, for example to allow connection of an additional pipe section to the end thereof.

As used herein, 'deployment' of a pipe string from a vessel in an S-lay operation refers to the dispatch, or paying out, of a pipe string from the deck of the vessel. In particular during a deployment operation the pipe string is eased off the stern of the vessel through the tension present in the pipe string. Specifically, the deployed portion of the pipe string extends from the vessel as a pipeline catenary. An end of this pipe string is attached to the seabed, or other fixed point, such that as the vessel moves forward the pipe string is pulled from the stern of the vessel. Put another way, as the vessel moves forward the new pipe section is eased from the vessel by the pipeline catenary.

As used herein, a 'substantially stationary position', for example with respect to an end of a pipe string or a pipe section (when held by a clamp), refers to a substantially stationary position with respect to the deployed pipe string. For example, for an end of a pipe string to remain substantially stationary with respect to the deployed pipe string (i.e. the deployed portion thereof), it would be understood that the end of the pipe string must not be substantially moved so as to change the arrangement of the pipe string, for example a change in the tension (omitting any effects of a transient sea thereon).

As used herein, reference to 'an end' of a pipe string or pipe section, refers in general to a position proximate the end. For example, in an arrangement with first and second moving clamps configured to clamp and support a pipe string, both clamps may be located 'at an end' of a pipe string. That is, both clamps can be simultaneously located towards, or near to, the end of the pipeline.

As used herein, a sheave may otherwise be termed a pulley or a grooved wheel. A floating sheave refers to a sheave (or pulley or grooved wheel) which is not fixed in position. That is, a floating sheave may be supported by the winching element directed over or around the sheave itself.

As used herein, 'render' with regards to a pipeline refers to a compensation in position/movement of the pipeline to maintain a relatively constant tension, or a desired tension, in the pipeline. The rendering process may be, for example, in response to a surge event. In general, rendering is achieved through controlling the pay-out speed of the pipeline (for example, decoupling the pay-out speed of the pipeline from the vessel speed). As used herein, a 'surge event' refers to an unintended movement (that is, a movement not planned as part of laying operations) of a vessel, for example due to sea conditions. In general, a surge event as described herein refers to a movement along the longitudinal axis of the vessel, i.e. a forward or backwards movement.

Embodiments of the invention are further described hereinafter with reference to the accompanying drawings, in which:
Fig. 1 illustrates a side view of a simplified S-lay operation;
Fig. 2 illustrates a top view of a vessel including a clamping system for joining and deploying pipe;
Figs. 3a to 3k illustrates the vessel of Fig. 2 performing a laying operation;
Figs. 4a and 4b illustrate side views of a system for maintaining tension in an S-lay pipeline;
Figs. 5a and 5b illustrate side views of the system of Figs. 4a and 4b, with a second clamp in different positions;
Figs. 6a and 6b illustrate side views of the system of Figs. 4a and 4b, with first and second clamps in different positions;
Figs. 7 and 8 illustrate side and top views, respectively, of an S-lay pipelay system including a retractable stinger;
Figs. 9 and 10 illustrate the stinger of Figs. 7 and 8 in operational and retracted positions, respectively;
Figs. 11a and 11b illustrate a front view of a roller support in operational and retracted positions, respectively;
11c illustrates an expanded view of the roller support as illustrated in Fig. 11b; and
Fig. 12 illustrates a side view of a system including the roller support as illustrated in Figs 11a-11c.

In the drawings like reference numerals refer to like parts.

Figure 2, illustrates a system 200 for continuously joining and deploying pipe from a moving vessel 202.

The system 200 includes a guiding system, which in this example is a track system (not shown in Figure 2), configured to be mounted on the vessel 202 (i.e. the track system is fixed in position with respect to the vessel).

The system 200 further includes a joining system 208. In general, the joining system 208 is a system for joining pipes together. In particular, the joining system 208 is configured to join additional pipe sections (for example additional pipe section 152) with an end of the deployed pipe string 150.

The joining system 208 is moveable along the guiding system in a direction substantially corresponding to the firing line of a pipe string 150

In this example the joining system 208 includes a joining clamp configured to clamp an end of the deployed pipe string 150 and an end of the additional pipe section 152. In particular, the joining clamp is configured to clamp the end of both the deployed pipe string 150 and the additional pipe section 152 to allow the ends to be joined (in this example the joining clamp provides no support to the catenary load of the deployed pipe string 150 but simply maintains a constant relative position between the pipe string 150 and the additional pipe section 152). Any suitable joining clamp may be used. For example the joining clamp may receive the ends of deployed pipe string 150 and the additional pipe section 152 in push-fit connections.

In this example, the joining system 208 further includes a work platform. The joining clamp is mounted on, or coupled to, the work platform. The work platform facilitates the presence of workers and/or machinery for performing a joining operation, for example a welding operation or push fit connection to join the deployed pipe string 150 and the pipe section 152.

In this example, the joining system 208 is moveable along the guiding system by a stroke length (i.e. a range of linear motion), the stroke length being substantially equal to or greater than the length of the additional pipe section 152. For example, the joining system 208 may have a stroke length of about 12m length, for example between about 10 and 15m.

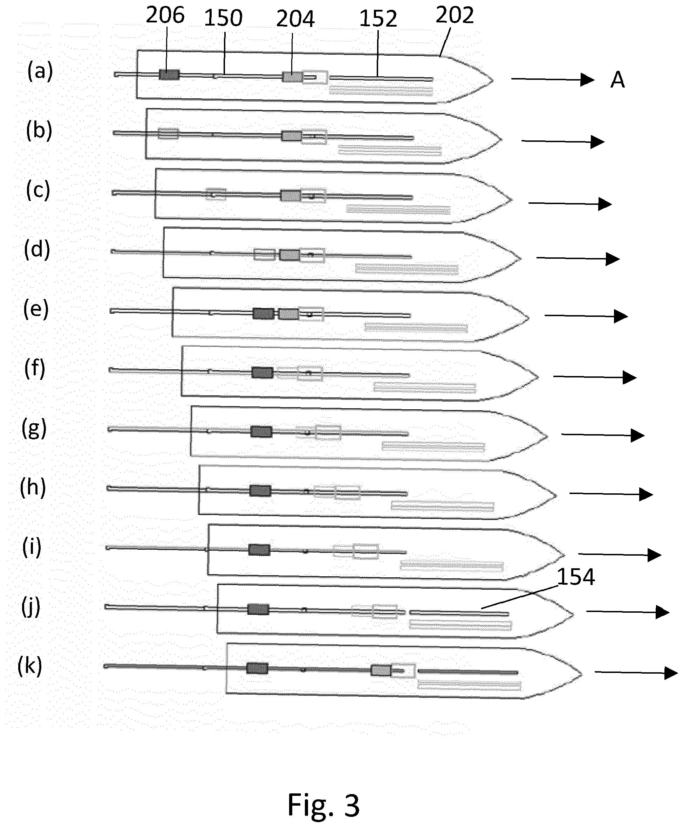

Figures 3a to 3k illustrate the system 200 in operation - that is, performing a method of continuously joining and deploying pipe from the vessel 202 as it moves. Figure 3a illustrates the system with the deployed pipe string 150 with an end thereof extending onto the deck of the vessel. The additional pipe section 152 is positioned coaxially with the deployed pipe string 150. As shown in Figure 3b, the end of the additional pipe section 152 is then brought into close proximity with the end of the deployed string 150. The joining system 208 (in particular the joining clamp thereof) is actuated to hold the end of the deployed pipe string 150 and the additional pipe string 152. For example, the ends of the deployed pipe string 150 and the additional pipe string 152 may be inserted into the joining clamp (i.e. as a push fit) to actuate the joining clamp into a clamping configuration.

As the vessel moves in a laying direction (illustrated by arrow A), the joining system 208 moves along the guiding system in a direction opposite to the laying direction (see Figures 3c to 3e). During this time, the joining system performs a joining operation, joining the additional pipe section 152 to the deployed pipe string 150 to form an extended pipe string. For the optimum process of continuous joining and deployment, the speed of the vessel in the laying direction is such that during the time taken to join the additional pipe section to the deployed pipe string and return the joining system to the beginning of its stroke, the vessel has travelled a distance substantially equal to the length of the additional pipe section. In particular, the speed of the vessel is slightly below 1 pipe length per join time (allowing time to get the production equipment back to the front of its stroke ready to perform the next join). This is an optimum speed for continuous joining and deployment of pipeline.

That is, as the vessel moves, the extended pipe string is continuously deployed from the vessel. For a vessel moving about 1 pipe length per join time, during the time for the deployed pipe string 150 to be joined to the additional pipe section 152, the vessel has already moved through most of the length of an additional pipe section such that a length of pipe equal to the additional pipe section 152 has been eased from the vessel.

Once the joining process is complete the joining system 208 releases the extended pipe string and moves along the guiding system in the laying direction towards a further additional pipe section 154 that has been brought into the firing line from a pipe stack located to the side of the firing line to allow the continuous joining/deployment process to continue.

The use of a movable joining system (or production equipment) allows the joining and deployment of the pipe string (i.e. the lay cycle of the pipe string) to be continued during vessel motion. Put another way there is no need to stop the vessel during attachment and subsequent deployment of the pipeline. In particular, the joining system has a passive motion that in effect decouples the deployment speed of the pipeline from the vessel speed. For example, the joining system can move between ends of additional pipe sections to allow each pipe section to be joined to a pipe string at a first end and then be joined to a subsequent pipe section at a second end.

When the joining process is performed with the production equipment effectively moving aft along the deck (or the vessel moving forward) with a stroke length that is at least as long as the length of the additional pipe section, the lay process can be maintained with a constant, optimal, vessel motion.

In this example the system 200 further includes supporting means for supporting the deployed pipe string during laying operations.

In some examples the supporting means may include at least one tensioner. In such examples, the at least one tensioner supports the catenary load of the deployed pipe string. The at least one tensioner is positioned in an aft position within the firing line relative to the joining system. Specifically, the at least one tensioner is positioned a distance away from the joining system (towards the vessel stern) that allows the joining system to move through its stroke length.

In this example, the support means includes a first clamp 204 and a second clamp 206, the first and second clamps 204, 206 each being configured to support a pipe string 150 during laying operations. That is, actuation of either (or both) of the first and second clamps 204, 206 causes the respective clamp to collect and secure the pipe string 150, supporting the catenary load thereof.

The clamps 204, 206 are configured to withstand radial and/or axial loads. In this example, the first and second clamps 204, 206 are friction clamps. However in other examples collar clamp types may be used. Typically the clamps have a capacity of 50 to 100 tonnes, which is sufficient to support the weight of the deployed S-lay pipe following attachment of the pipe section to the deployed pipe.

The first and second clamps 204, 206 are moveable along the track system. That is, the first and second clamps 204, 206 are movably mounted on the track system, i.e. mounted on the track system in a manner which allows the first and second clamps 204, 206 to move there along. For example, the first and second clamps 204, 206 may be mounted on the track system via rollers or the like.

The first and second clamps 204, 206 are movable along the track system in a direction substantially corresponding to the firing line, or laying axis, of a pipe string. In other words, the first and second clamps 204, 206 are configured to support a pipe string 150 positioned in the firing line, and move the pipe string 150 along the firing line in a laying direction (and a direction opposite to the laying direction). Typically, on a vessel the firing line of the pipe string is substantially aligned with the longitudinal axis of the vessel. As such, the track system is arranged along the longitudinal axis of the vessel 202. In the illustrated example, the first and second clamps 204, 206 are positioned fore and aft respectively (i.e. towards the right and left of Figure 2, respectively).

In this example, the clamps 204, 206 operate in series. In particular, the clamps 204, 206 act to pass the pipe string between themselves to ensure the pipe string is supported during the continuous deployment thereof.

In this example, the first clamp 204 is coupled to and movable with the joining system. This helps the joining process to take place in an efficient manner while the vessel moves. That is, the movement of the first clamp 204 drives movement of the joining system.

Referring back to Figures 3a to 3k, Figure 3a illustrates the system in an initial arrangement with the deployed pipe string 150 being supported by both the first and second clamps 204, 206. That is, the first and second clamps 204, 206 are both actuated so as to clamp on to the pipe string 150 and support the catenary load of the pipe string 150.

Figure 3b illustrates the system in a subsequent step in which the deployed pipe string 150 has been released by the second clamp 206 so that the deployed pipe string 150 is solely supported by the first clamp 204. The additional pipe section 152 has been brought into substantial abutment with the deployed pipe string 150.

With the first clamp 204 in its clamping configuration (clamped onto the pipe string 150), if the vessel moves in a laying direction, the first clamp 204 is moved along the track system to maintain the end of the deployed pipe string 150 in a substantially stationary position. For example, as shown in Figures 3b to 3d, the vessel 202 has maintained a forward motion (as indicated by the arrow A), while the first clamp 204 and the pipe string 150 have remained in a substantially stationary position, decoupled from the motion of the vessel 202. To maintain the first clamp 204 in the substantially stationary position, the first clamp 204 is moved aft at a speed substantially equal to (and opposite to) the vessel speed.

The additional pipe section 152 is joined to the deployed pipe string 150 to form an extended pipe string. As the movement of the first clamp 204 and the joining system are coupled, when the first clamp 204 and joining clamp are actuated the end of both the deployed pipe string 150 and the additional pipe section 152 can remain in a substantially stationary position as the first clamp 204 moves along the track system. As such, the ends of both the deployed pipe string 150 and the pipe section 152 can remain substantially stationary during the joining procedure and therefore the joining procedure can carry on during vessel transit.

Following, or during the joining procedure, the extended pipe string is clamped with the second clamp 206. As illustrated by Figures 3b to 3e, the step of clamping the extended pipe string with the second clamp 206 involves firstly moving the second clamp 206 towards an end of the extended pipe string. In particular the second clamp 206 is moved from a position proximate (i.e. at or close to or next to) the stern of the vessel to a position proximate or substantially abutting the first clamp 204. The second clamp 206 is then actuated to clamp the extended pipe string. Once clamped with the second clamp 206, the extended pipe string is then released from the first clamp 204 (Figure 3f). As such, the extended pipe string and the associated catenary load is supported solely by the second clamp 206. As illustrated in Figures 3f to 3j, as the vessel moves in the laying direction the second clamp 206, clamped onto the extended pipe string, is moved along the track system to maintain the end of the extended pipe string in a substantially stationary position.

The first clamp 204 is moved along the track system towards an end of the extended pipe string (as shown in Figures 3f to 3j). The first clamp 204 is then actuated to clamp the end of the extended pipe string. That is, in Figure 3f the first clamp 204 is located at a position corresponding to the end of the pipe section 152 (now part of the extended pipe string). The first clamp 204 is then moved through the length of the pipe section 152 to the opposing end thereof, said opposing end corresponding to the end of the extended pipe string (as shown in Figure 3j).

As the extended pipe string is passed between the clamps, the pipe string is being continuously deployed from the vessel. That is, the pipe section is gradually fed from the stern of the vessel 206. In other words, the length of the deployed pipe string is increased in length by the length of a pipe section.

The first and second clamps 204, 206 may have stroke lengths at least equal to the length of a pipe section (as per the joining system). In the example shown in Figures 3a to 3f, a single pass is made between the clamps, however in other examples several passes made be made during the deployment of a length of additional pipe section.

As mentioned above, further additional pipe sections can be provided and added to an extended pipe string (of increasing length with each additional pipe section), which is then passed between the clamps 204, 206 and deployed.

The use of two travelling clamps 204, 206 as a means to support and deploy the pipe string assists in the continuous joining and deployment of the pipe string (i.e. the lay cycle of the pipe string) during vessel motion. In particular, the clamps 204, 206 (in the same manner as the joining system) have a passive motion that in effect decouples the deployment speed of the pipeline from the vessel speed.

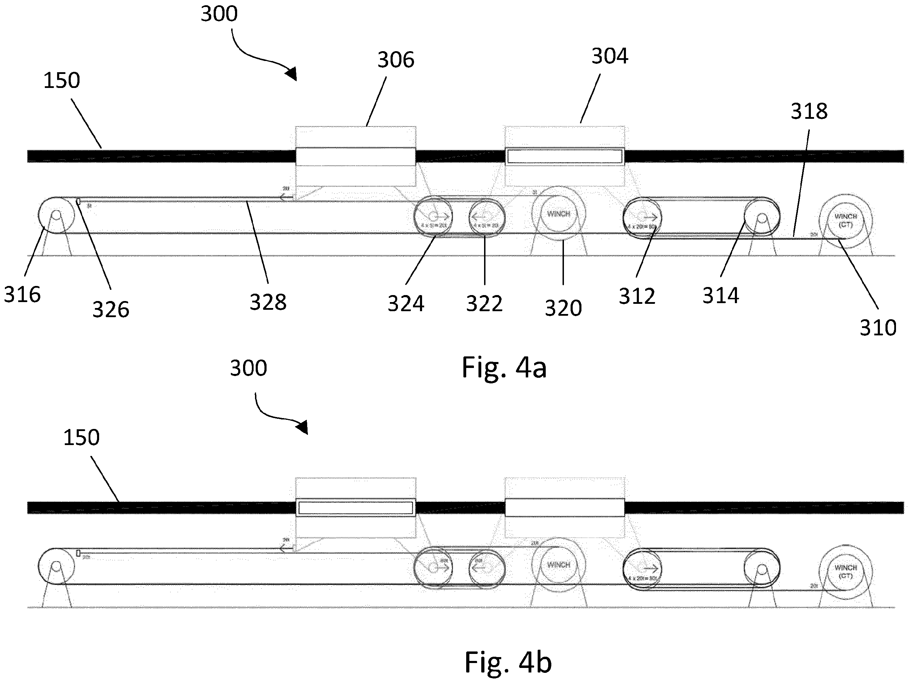

The position/movement of the clamps 204, 206 may be controlled in any suitable manner. For example, the position/movement of the clamps 204, 206 may be controlled by at least one winch system. For example, the system for controlling position/movement of the clamps 204, 206 may include a first winch system including a constant tension winch coupled to the first and second clamps 204, 206, the first winch system being configured to control the position of the first and second clamps with respect to the track system. The system may further include a second winch system coupled to the first and second clamps 204, 206, the second winch system being configured to control the relative position of the first and second clamps on the track system. The winch system used may be that illustrated in Figures 4a to 6b (with clamps 204, 206 corresponding to clamps 304, 306 respectively).

Figures 4a and 4b illustrates a system 300 for maintaining tension in an S-lay pipeline and/or for joining and deploying pipe from a moving vessel.

The system 300 includes a guiding system, which in this example is a track system (not illustrated) configured to be mounted on a vessel. The system 300 further includes a first clamp 304 and a second clamp 306, the first and second clamps 304, 306 being configured to support a pipe string 150 during laying operations. Such laying operations may include joining and deployment of a pipeline (for example the system 300 may be used in the manner described above for Figures 2 to 3) and/or for rendering pipeline during a surge event. In this example, the first and second clamps 304, 306 are positioned fore and aft respectively.

Actuation of either (or both) of the first and second clamps 304, 306 causes the clamp to collect and secure the pipe string 150, supporting the catenary load thereof. Figure 4a illustrates the system 300 with the first clamp 304 in a clamping configuration and the second clamp 306 in an open configuration, such that the pipe string 150 is supported by the first clamp 304 only. Figure 4b illustrates the system 300 with the second clamp 306 in a clamping configuration and the first clamp in an open configuration, such that the pipe string 150 is supported by the second clamp 306 only.

The first and second clamps 304, 306 are moveable along the track system in a direction substantially corresponding to the firing line, or laying axis, of a pipe string 150.

The system further includes a first winch system. The first winch system includes a constant tension, or rendering winch 310 coupled to the first and second clamps 304, 306. In this example, the first winch system includes a floating sheave 312 (or set of floating sheaves), attached to the first clamp 304. That is, the first clamp 304 is fixed in position with respect to the floating sheave 312. In this example, a flange or protrusion extends from the first clamp 304 and is attached directly to the floating sheave 312, although other connections are possible.

The first winch system further includes a first fixed sheave 314 (or set of fixed sheaves) and a second fixed sheave 316. In this example, the first and second fixed sheaves 314, 316 are positioned fore and aft respectively, with the second fixed sheave 316 being positioned proximate/towards the stern of the vessel. The floating sheave 312 is positioned between the fixed sheaves 314, 316.

The first winch system further includes a winching element 318, attached to the constant tension winch 310 and to the second clamp 306. Any suitable winching element may be used, for example a rope, cable or chain. The winching element 318 is routed from the constant tension winch 310, around each of the floating sheave 312, the first fixed sheave 314 and the second fixed sheave 316 to the second clamp 306. In particular, the winching element 318 is routed around each of the floating sheave 312, the first fixed sheave 314 and the second fixed sheave 316 in turn.

Put another way, the winching element 318 extends from the constant tension winch 310 to the floating sheave 312 in a first direction; extends around the floating sheave 312 and to the first fixed sheave 314 in a second direction, opposite to the first direction; extends around the first fixed sheave 314 and to the second fixed sheave 316 in the first direction; and extends around the second fixed sheave 316 and to the second clamp 306 in the second direction. In the arrangement illustrated, the first direction is towards the vessel stern and the second direction is towards the vessel bow.

In this example, there are two windings of the winching element 318 around each of the floating sheave 312 and the first fixed sheave 314 (i.e. there are 4 falls of rope around these sheaves). However, in other systems more or less windings may be used as required.

In this example the 4 falls of winching element 318 provide a total pull of 133% of the catenary load. The end of the winching element 318, as a single length, is routed to the back of the second clamp 306 via the fixed sheave 316 at the stern of the system. This length of winching element 318 has the same tension as the rest of the winching element 318. The end of the winching element 318 therefore applies 33% of the catenary load to the second clamp 306 in the aft direction - i.e. acting against the pull on the floating sheave 312 to balance the system.

The system further includes a second winch system. The second winch system is coupled to the first and second clamps 304, 306.

In this example, the second winch system comprises a second winch 320 coupled to the first and second clamps 304, 306. In this example the second winch 320 is a length controlled winch. That is, the second winch 320 pays out and pays in to a length chosen by a user or determined by a control system.

In this example, the second winch system includes first and second floating sheaves 322, 324. The first clamp 304 is attached to the first floating sheave 322 and the second clamp 306 is attached to the second floating sheave 324. In this example, a flange or protrusion extends from the first clamp 304 and is attached directly to the first floating sheave 322 and a flange or protrusion extends from the second clamp 306 and is attached directly to the second floating sheave 324, although other connections are possible. In this example, the first and second floating sheaves 322, 324 are positioned fore and aft respectively.

The second winch system further includes a fixed point 326. The fixed point 326 is a mounting point (for a winching element), with a fixed position with respect to the track system / vessel. In this example, the fixed point 326 is positioned proximate, or close to, the stern of the vessel.

The second winch system further includes a winching element 328, attached to the winch 320 of the second winch system and to the fixed point 326. Any suitable winching element may be used, for example a rope, cable or chain.

In this example, the first and second floating sheaves 322, 324 are located between the winch 320 and the fixed point 326. The winching element 328 is routed from the winch 320 of the second winch system, around the second floating sheave 324, around the first floating sheave 322 and to the fixed point 326. In particular, the winching element 328 is routed around each of the second floating sheave 324, the first floating sheave 322 in turn. Put another way, the winching element 328 extends from the winch 320 to the second floating sheave 324 in a first direction; extends around the second floating sheave 322 and to the first floating sheave 324 in a second direction, opposite to the first direction; and extends around the first floating sheave 324 and to the fixed point 326 in the first direction. In the arrangement illustrated, the first direction is towards the vessel stern and the second direction is towards the vessel bow. There may be multiple windings around the first and second floating sheaves 322, 324.

In this example, the first and second winch 310, 320 are positioned fore and aft respectively although other suitable arrangements are possible. The first and second winch systems are mounted on the vessel. This is beneficial for packaging and service routing.

The first winch system is configured to control the position of the first and second clamps 304, 306 with respect to the track system. That is, paying the winching element 318 in or out of the first winch 310 traverses the first and second clamps 304, 306 along the track system (generally simultaneously).

The second winch system is configured to control the relative position of the first and second clamps 304, 306 on the track system. That is, by paying in the second winch 320 the first and second clamps 304, 306 get closer and paying out of the second winch 320 the first and second clamps 304, 306 move further apart.

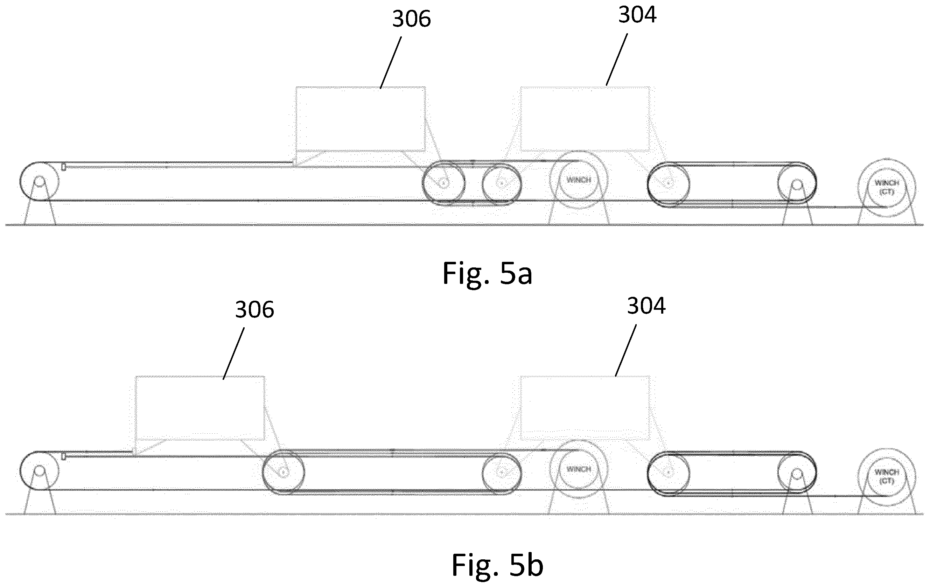

Figures 5a and 5b illustrate the system 300 with the separation between clamps 304, 306 being changed. In particular, Figure 5a illustrates the system 300 with both clamps 304, 306 in their foremost position. As the second winch 320 pays out, the second floating sheave 324 moves aft with the first floating sheave 322 remaining stationary. As the second clamp 306 is attached to the second floating sheave 324, the second clamp 306 also moves aft. As the first clamp 304 is attached to the first floating sheave 322, the first clamp 304 remains stationary. The first winch 310 pays in to accommodate the movement of the second clamp 306.

The configuration / routing of the second winch system allows the first and second clamps 304, 306 to move along the firing line without the second winch 320 having to pay out or in. Put another way the winching element routing allows passive motion of the clamps 304, 306 without paying into, or out from the second winch 320, as long as the clamps 304, 306 remain at the same separation. In particular, the routing includes two fixed end points (fixed point 326 and second winch 320) with two floating sheaves 322, 324 therebetween each being connected to a respective clamp 304, 306. The floating sheaves 322, 324 can move along the firing line, maintaining the separation between the clamps without the second winch 320 having to pay in or out.

When the second winch 320 is not paying out (i.e. when the spacing between the clamps 304, 306 is maintained), the first winch 310 can move both the first and second clamps 304, 306 together (i.e. simultaneously, by the same distance). As such, the second winching system is configured so that during a surge event, the spacing between the first clamp 304 and the second clamp 306 is maintained passively.

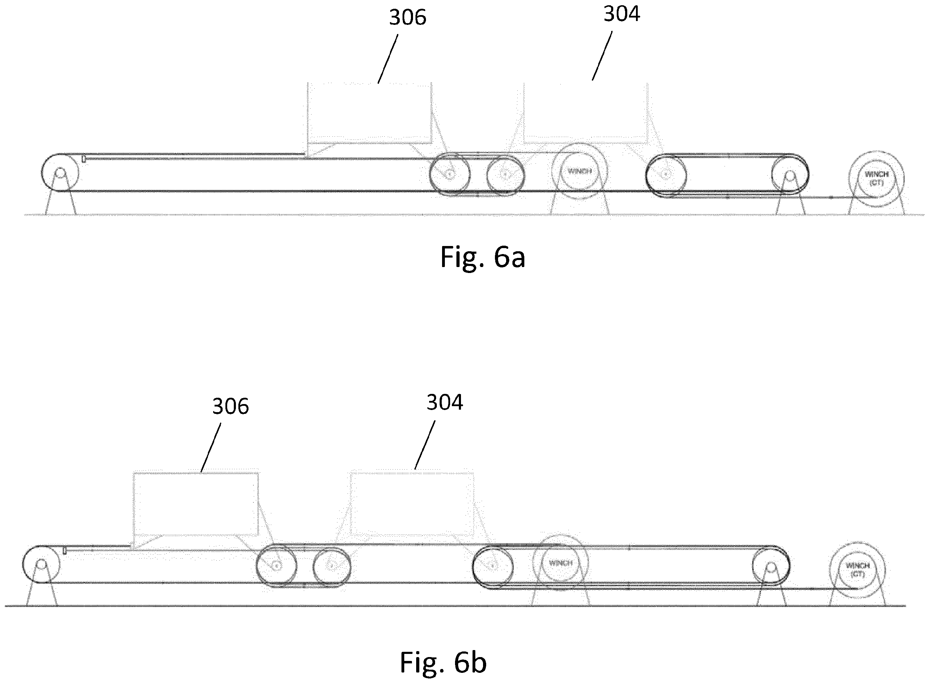

Figures 6a and 6b illustrates the system 300 with the first and second clamps 304, 306 being moved simultaneously along the firing line. This is useful, for example, during a surge event. For example, the first winch system can render both the first and second clamps 304, 306 simultaneously during a surge event allowing the tension in the pipe string to be maintained.

Referring back to Figures 6a and 6b, Figure 6a represents the arrangement of clamps 304, 306 with the vessel in a first position and Figure 6b represents the arrangement in response to a vessel surge in the forward direction. To maintain the tension in the pipe string 150 the first winch system renders so as to maintain the pipe string 150 in a substantially stationary position while the vessel surges. In other words, the constant tension winch 310 renders to adjust the position of the clamps 304, 306 with respect to the vessel to maintain the catenary tension. In this example, the clamps 304, 306 are moved from a first, foremost, position (Figure 6a) towards the vessel stern (Figure 6b) to accommodate for vessel movement in the forward direction.

To move the clamps 304, 306 between the arrangements shown in Figures 6a and 6b, the constant tension winch 310 pays out the winching element 318. As the winching element 318 pays out, the floating sheave 312 is able to move away from the fixed sheave 314. With the separation between sheaves 322 and 324 fixed, both clamps 304, 306 are pulled in the aft direction towards the stern of the vessel by the catenary load.

In the converse event (a surge event in the aft direction), the constant tension winch 310 pays in the winching element 318. As such, the floating sheave 312 is pulled towards the fixed sheave 314 using the falls of the winching element 318 around the floating sheave 312 and the fixed sheave 314. The first clamp 304, attached to the floating sheave 312, is therefore moved in the forward direction. With the separation between sheaves 322 and 324 fixed, both clamps 304, 306 are pulled in the forward direction towards the bow of the vessel by the catenary load.

The above described winching system provides several advantages. By configuring the first and second winching systems such that the both clamps 304, 306 can be rendered simultaneously, while the second winching system remains passive, rendering can occur regardless of which clamp is clamped onto the pipeline. Put another way, the second winch 320 can maintain the separation of the clamps 304, 306 during render, which allows rendering during the transfer of load between the clamps 304, 306 (hence allowing laying operations to continue during rendering, whereas normal systems would be stopped during surge). This results in improved flexibility of the system.

The catenary load is always supported by the first winch 310, regardless of which clamp is engaged on the pipe. This allows a straight forward load transfer sequence between the clamps.

The described winch routing enables the system to have a single actively controlled winch (second winching system), pulling against a constant tension winch (first winching system). Specifically, when the first winch 310 pays in, the first winch system is configured to apply a force to the second clamp 306 in a first direction (towards the vessel stern) and apply a force to the first clamp 304 in a second direction (towards the vessel bow), opposed to the first direction. In contrast, when the second winch 320 pays in, the second winch system is configured to apply a force to the second clamp 306 in the second direction (towards the vessel bow) and apply a force to the first clamp in the first direction (towards the vessel stern). This reduces a lot of complexity in the control system, and reduces the likelihood of overloading one winch with another.

With the above described arrangement, when there is no catenary load, and the first clamp 304 is at the forward-most extent of the rails; by paying out with the second winch 320, the second clamp 306 is able to be moved aft, due to the single fall from the first winch 310 still being able to apply contact tension at the back of the second clamp 306.

With the above described arrangement, on occasions where the first clamp 304 is clamped onto the pipe, and is travelling aft with respect to the vessel and the vessel surges, the maximum required speed of the first, rendering, winch can be reduced by paying out with the second winch 320.

Various modifications to the above described winching system are possible. For example, the Figures illustrate a layout with only a single winch (e.g. a single drum winch) for each winching system. However, additional winches or winches with additional capacity (for example a double drum winch) may be used within each winching system. Similarly, the sheave systems may be duplicated to share the load.

The winching systems may be used to drive joining and deployment operations. More specifically the first and second winching systems may be used to move the first and second clamps 304, 306 through the steps illustrated in Figures 3(a) to 3(k).

The winching systems may be controlled by a control system. The control system may receive information regarding the vessels position and/or velocity and may coordinate operation of the first and second winching systems accordingly.

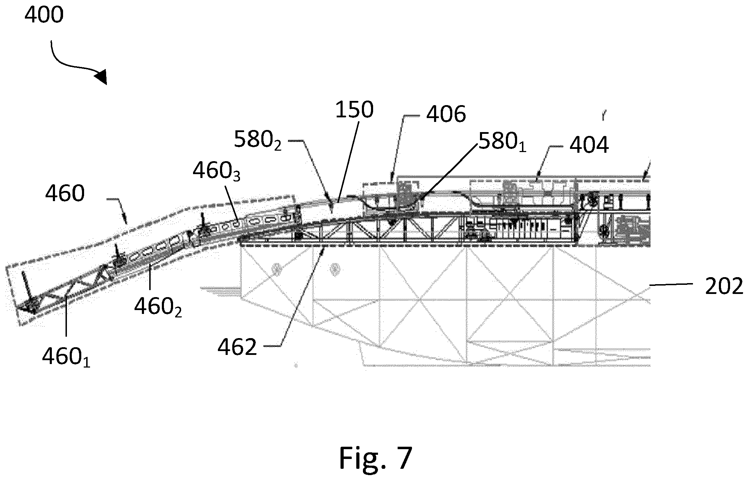

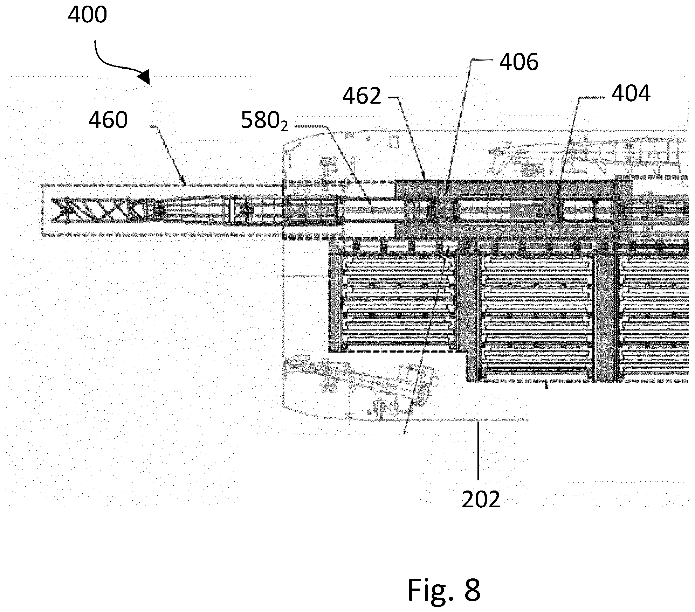

Figures 7 and 8 illustrate a system 400 for deploying pipe from a vessel 202.

The system 400 includes a guiding member 460 for guiding a pipe string during deployment into an S-lay configuration. In particular the guiding member 460 is configured to support the pipe string as it is deployed from vessel. In this example, the guiding member 460 is a stinger. The stinger 460 has a radius of curvature so as to provide a gradual bend to a pipe string during deployment. In other words, the radius of curvature of the stinger 460 allows the pipe string to be supported in an arc as it leaves the vessel to reduce pipe stresses and stop pipe buckling.

In this example, the guiding member has a radius of curvature of from about100m to about 250m, more aptly from about 150m to about 180m.

In this example the stinger 460 comprises a body portion having a plurality of sections 460_{1,2,3} connected in series. In this example, the sections 460_{1,2,3} are angled with respect to one another so as to provide the radius of curvature of the stinger 460.

The system 400 further includes a guiding system, which in this example is a track system 462, configured to be mounted on the vessel 202. In use, the guiding member 460 is movable along the track system 462 between a first, operational, position; and a second, retracted, position. That is, the guiding member 460 is movably mounted on the track system 462 (i.e. mounted on the track system in a manner which allows the guiding member 462 to move there along). For example the guiding member 460 may be mounted on the track system 462 by rollers or the like.

In this example, the system includes a first clamp 404 and a second clamp 406, the first and second clamps 404, 406 being configured to support a pipe string 150 during laying operations. The first and second clamps 404, 406 are moveable along the track system 462 in a direction substantially corresponding to the firing line of a pipe string. In this example, the first and second clamps 404, 406 are of the type described in previous examples (that is, the first and second clamps 404, 406 may be structurally and functionally equivalent to first and second clamps 204, 304, 206, 306). In other words the first and second clamps 404, 406 are configured to support a pipe string during laying operations and/or to maintain tension in the pipe string during laying operations.

In this example, a common track system 462 is used for both the guiding member 460 and the first and second clamps 404, 406. This is beneficial in that the structure of the track system 462 can be quite large and heavy. Therefore, using the track system 462 as 'dual-purpose' in this manner ensures that the additional functionality provided through the track system 462 justifies the additional mass and occupied space.

Figure 7 illustrates the system 400 with the guiding member 460 in the first, operational, position. In the first, operational, position the guiding member 460 extends outwardly from the stern of the vessel 202. In general, the guiding member 460 is positioned in the first, operational, position during deployment of a pipe string from the vessel 202. This allows the deployed pipe to be guided into an S-lay configuration by the guiding member 460.

In this example, in the first, operational, position the guiding member extends outwardly from the stern of the vessel by a distance of from about 15m to about 50m. It would be understood that this represents a 'relatively small' guiding member in relation to those known in the art. As such, this helps ensure the guiding member can be retracted onto the deck of the vessel in the manner described herein without additional folding mechanisms in which the guiding member is folded prior to or during retraction.

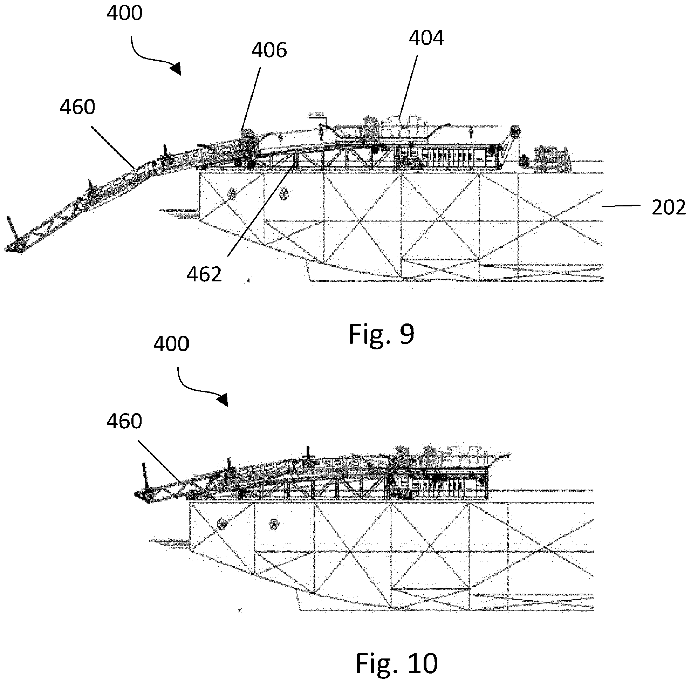

Figures 9 and 10 illustrate the system 400 as the guiding member 460 is moved from the first, operational, position (Figure 9) to the second, retracted, position (Figure 10).

In this example, the system further comprises a retraction system coupled to the guiding member 460, the retraction system being configured to move the guiding member 460 between the operational and retracted positions. In this example the retraction system includes at least one of the clamps 404, 406 (in the illustrated example the second clamp 406 is used). As shown in Figure 9, before retraction the second clamp 406 is moved aft towards an end of the guiding member 460. The second clamp 406 is attached to the guiding member 460. The second clamp 406 is then moved in the forward direction, away from the vessel stern and in doing so retracts the guiding member 460 on to the deck of the vessel.

In this example, the retraction system further includes at least one winch configured to traverse the clamp(s) along the track system. In general, the winch moves the guiding member 460 to its operational position by paying out a winching element and returns the guiding member 460 to its retracted position by paying in the winching element. For example, the winch may be at least one of winches 310, 320 as described previously configured to control the movements of one or both of clamp 404, 406.

Figure 10 illustrates the system 400 with the guiding member 460 in the second, retracted, position. In the second, retracted, position the guiding member 460 is substantially retracted onto the deck of the vessel 202. That is, in the second, retracted, position the guiding member 460 doesn't substantially extend outwardly from the stern of the vessel. Instead the guiding member 460 is located on the deck of the vessel 202 in its entirety (or at least the majority thereof). More specifically, all sections 460_{1,2,3} of the guiding member 460 are located on the deck of the vessel 202.

In general the guiding member 460 may be moved to the second, retracted, position in response to a break in laying operations. Such a break in laying operations may be a result of a completed lay operation, a surge event or unsuitable maritime conditions for example. For example the guiding member 460 may be moved to the second, retracted, position when the vessel is to be moved in transit without any active deployment of a pipe string.

In this example, the guiding member 460 can be locked in either of the operational / retracted positions. That is, the system 400 may include locking means configured to lock the guiding member 460 in the operational and/or retracted position.

In this example, the track system 462 (or at least the portion of the track system positioned towards the vessel stern) is curved to generally match the radius of curvature of the guiding member 460. In this manner the guiding member 460 can simply follow the track system 462 as it moves between the operational and retracted positions. That is, the guiding member 460 is retracted on to the deck of the vessel 202 while in an operational configuration (i.e. the guiding member 460 is not folded before retraction).

However, in some examples the radius of curvature of the track system 462 is slightly larger than the radius of curvature of the guiding member 460. For example, the track system may have a radius of curvature of about 150m to about 300m. As such, the guiding member 460 is made to straighten slightly as it is retracted onto the vessel.

In this example, each section 460_{1,2,3} of the guiding member 460 is rotatably coupled to adjacent sections to allow relative rotation therebetween. This rotation helps accommodate the straightening of the guiding member. In particular, the upper surface of each section 460_{1,2,3} of the guiding member 460 is pinned to adjacent sections, to allow rotation therebetween. Compression only connections are used towards a lower surface of each section to allow for an increase in the effective radius of curvature, while providing minimal, or no, resistance as the guiding member 460 is straightened out.

The above described retractable stinger provides several advantages. For example, by allowing the guiding member 460 to retract onto the vessel, the overall vessel length is reduced, increasing vessel manoeuvrability. The efficiency of the guiding member 460 is improved as non-operational accelerations are reduced due to the distance between the stinger and the vessel centre of rotation being reduced. In addition, the guiding member 460 can be better supported by the vessel when retracted onto the vessel deck.

The use of clamps, particularly those used to perform laying operations, to move the guiding member 460 between operational and retracted positions helps ensure that the retraction of the guiding member 460 does not interfere with the laying equipment. For example, with known systems tensioners are generally used to maintain the pipeline at a required tension. These are located in the pipeline and would obstruct the guiding member 460 during retraction.

In general, providing the guiding member 460 as a plurality of sections 460₁,₂,₃ allows the radius of curvature of the guiding member 460 to be varied, for example for different product requirements. This can be set up, prior to deployment or during use, reducing complexity. In the latter case, the straightening of the guiding member 460 (and subsequent rotation between adjacent sections) may help provide access to the fixtures between adjacent sections to allow the set-up to be changed.

In other examples the guiding member 460 may have a fixed radius of curvature. For example the guiding member 460 may include a single section only.

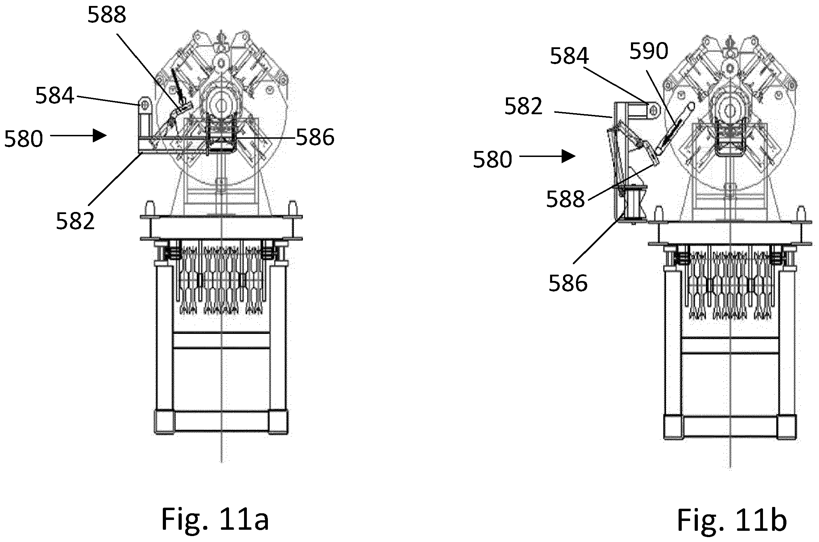

Figures 11a and 11b illustrate a roller support 580 for supporting pipe during a pipelaying operation, for example an S-lay operation.

The roller support 580 includes a body portion 582 configured to be mounted on the deck of a vessel or on a guiding system/track system mounted on the deck of the vessel. In the illustrated example, the body portion 582 is mounted on a track system 562 mounted on the deck of a vessel.

The roller support 580 further includes a roller member 586 coupled to the body portion 582. Figure 11a illustrates the roller support 580 in a first, operational, position in which the roller member 586 is positioned in the firing line of a pipe to be laid. That is, the roller member 586 is positioned in the firing line so that a pipe can be supported thereon during pipelaying operations. In other words, in the first, operational, position the roller support 580 is positioned such that the roller member 586 can support a pipe in the firing line. The pipe can roll over the roller member 586 during deployment.

Figure 11b illustrates the roller support 580 in a second, retracted, position in which the roller member 586 is positioned away from the firing line. In other words, the roller support 580 is positioned away from the firing line to allow the passage of other components along the firing line / proximate the firing line.

The roller support 580 further includes an engagement member 588 extending from the body portion 582, wherein an applied force to the engagement member 588 causes the roller support 586 to move from its first, operational, position to its second, retracted, position.

In this example, the engagement member 588 is configured to engage with a corresponding engagement member 590 mounted on a pipelaying component movable along the firing line. For example, the pipelaying component may be a travelling clamp and/or a guiding member. These pipelaying components may be movable along the firing line via the track system (i.e. movable along the firing line in a manner that allows pipe to be supported in the firing line). In this example the applied force on the engagement member 588 comes from the engagement between the engagement member 588 of the roller support 580 and the engagement member of the pipelaying component. Put another way, engagement between the engagement member 588 of the roller support 580 and the engagement member 590 of the pipelaying component causes the roller support 580 to move from its first, operational, position to its second, retracted, position.

In this example, the roller support 580 is configured for use within a system for deploying pipe from a vessel. For example, a roller support 580 of the type described herein may be used as part of a system described in other examples of the this disclosure. For example, a system for deploying pipe from a vessel may include a track system configured to be mounted on the vessel; at least one roller support 580 of the type described herein; and at least one clamp, the at least one clamp being configured to support a pipe string during laying operations, the at least one clamp being moveable along the track system in a direction substantially corresponding to the firing line of a pipe string. In this example, the at least one clamp includes a clamp body; and an engagement member extending from the clamp body. The engagement member of the at least one clamp is configured to engage with (i.e. contact and apply a force to) the engagement member 588 of the roller support 580 positioned within the firing line causing the roller support 580 to move from its first, operational, position to its second, retracted, position. The at least one clamp may be clamps 204, 206, 304 and 306 of previous examples. For example, the roller supports 580 may be part of the system illustrate in Figure 7, with the roller supports 580 being mounted to the track system 462.

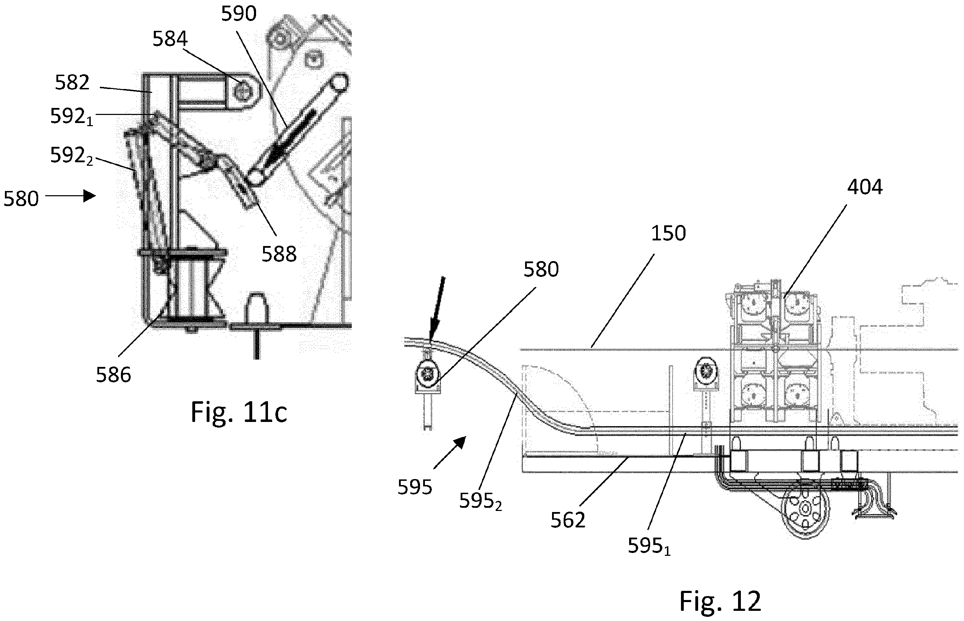

Figure 12 illustrates such a system. In this example, clamp 404 includes engagement member 595. In this example the engagement member 595 is a longitudinal rail extending substantially in the laying direction.

The longitudinal rail includes a base or lower portion 595₁ extending in a direction parallel to the firing line but spaced away from the firing line. In this example, the base portion 595₁ is spaced both downwardly and laterally from the firing line. The base portion 595₁ is coupled to the clamp 404 so that it protrudes from the body of clamp 404 in the fore and aft directions.

The longitudinal rail further includes at least one guiding portion 595₂. Figure 12 illustrates a guiding portion 595₂ extending from the aft end of the base portion 595₁. The guiding portion 595₂ curves upwardly away from the base portion 595₁ towards the firing line. It would be understood that the guiding portion 595₂ may not necessarily extend into the firing line itself - it need only extend to a position where engagement with the engagement member 588 of the roller support 580 is expected in use.

In use, the clamp 404 is traversed along the track system as part of a laying operation. As the clamp 404 reaches the position of the roller support 580 on the track system the engagement member 595 of the clamp 404 engages with the engagement member 588 of the roller support 580. In particular, the aft-positioned guiding portion 595₂ of the engagement member 595 engages with the engagement member 588 of the roller support 580. As a result, the roller support 580 is moved from the first, operational, position to the second, retracted, position, to allow the at least one clamp to move past the roller support 580. That is, the engagement member 588 of the roller support 580 engages with the guiding portion 595₂ and is guided along the profile thereof away from the firing line as the clamp 404 continues to traverse the track system. As the engagement member 595 is guided along the guiding portion 595₂ to the base portion 595₁ the roller support 580 to moves from its first, operational, position to its second, retracted, position.

As the clamp 404 continues to traverse the track system, the roller support 580 is maintained in the second, retracted, position by the base portion 595₁. This ensures the roller support 580 is retracted from the firing line as the clamp 404 passes by.

Although not shown, the longitudinal rail may include a corresponding guiding portion 595₂ extending from the fore end of the base portion 595₁. This may gradually allow the roller support 580 to return to its first, operational, position once the clamp has passed. However, in other examples (depending on the size of the clamp, and the length of the stroke) some of the roller supports may not pop up behind the passage of the clamp.

The system may include a plurality of roller supports 580. For example, in the system illustrated in Figure 7, there is a roller support 580₁ located between the clamps 404, 406 and a further roller support 580₂ located between the second clamp 406 and the stinger 460.

In this example, the body portion 582 is pivotally mounted on the track system. In particular, the body portion 582 is pivotally mounted to the track system at pivot mounting point 584. As such, the applied force to the engagement member 588 causes the body portion 582 to pivot with respect to the track system moving the roller support 580 from its first, operational, position to its second, retracted, position.

In this example, the engagement member 588 is coupled to the body portion via a support member 592, the support member having a first, locking, configuration, in which the body portion is locked in a first position corresponding to the first, operational, position of the roller support; and a second, folded, configuration, in which the body portion is able to rotate.

As best shown in Figure 11c, the support member 592 comprises first and second segments 592_{1,2,} the first and second segments being pivotally coupled. The applied force to the engagement member 588 causes a pivoting movement between the first and second segments 592_{1,2,} taking the support member 592 from the first locking configuration to the second, folded, configuration.

In this example the support member 592 is biased towards the first, locking, configuration. Any suitable biasing means may be used, for example a cylinder with an accumulator; or a gas strut type spring. In this manner, the roller support 580 can return to the first, operational, position once the clamp has moved past the roller support 580.

In this example, the roller support 580 includes locking means (not shown) configured to lock the roller support 580 in the second, retracted, position. The locking means may be operated manually. The roller support 580 may be locked in the second, retracted, position, for example prior to the retraction of a guiding member 460 such that there is no necessity for the guiding member 460 to include an engagement member.

The above described foldable roller support 580 allows the roller support to be configured so that it can be temporarily retracted away from the firing line, allowing movable pipelaying components to pass by. This increases flexibility within the system in that constrictions and the number/position of moving components along the firing line are lessened.

It will be clear to a person skilled in the art that features described in relation to any of the embodiments described above can be used interchangeably between different embodiments. The embodiments described above are examples to illustrate various features of the invention. For example, one or more of the clamping system, the winching system(s), the retractable stinger and the foldable rollers described herein may be combined into a single system for the purposes of joining and deploying pipeline (in particular in an S-lay configuration) and/or maintaining tension within a deployed pipeline. Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A system for maintaining tension in an S-lay pipeline, the system comprising:
a guiding system configured to be mounted on a vessel;
a first clamp;
a second clamp, the first and second clamps being configured to support a pipe string during laying operations, wherein the first and second clamps are moveable along the guiding system in a direction substantially corresponding to the firing line of a pipe string;
a first winch system comprising a constant tension winch coupled to the first and second clamps, the first winch system being configured to control the position of the first and second clamps with respect to the guiding system; and
a second winch system coupled to the first and second clamps, the second winch system being configured to control the relative position of the first and second clamps on the guiding system.

2. The system of claim 1, wherein the first and second clamps are positioned fore and aft respectively.

3. The system of claim 1 or claim 2, wherein the first winch system is configured to:
apply a force to the second clamp in a first direction; and
apply a force to the first clamp in a second direction, opposed to the first direction.

4. The system of any of claims 1 to 3, wherein the first winch system is configured to render both the first and second clamp simultaneously during a surge event.

5. The system of any of claims 1 to 4, wherein the second winching system is configured so that during a surge event, the spacing between the first clamp and the second clamp is maintained passively.

6. The system of any of claims 1 to 5, wherein the first winch system further comprises:
a floating sheave, attached to the first clamp;
a first fixed sheave;
a second fixed sheave; and
a winching element, attached to the constant tension winch and to the second clamp;
wherein the winching element is routed from the constant tension winch, around each of the floating sheave, the first fixed sheave and the second fixed sheave to the second clamp.

7. The system of any of claims 1 to 6, wherein the second winch system comprises a second winch coupled to the first and second clamps, the second winch being a length controlled winch.

8. The system of claim 7, wherein the second winch system further comprises:
first and second floating sheaves;
wherein the first clamp is attached to the first floating sheave and the second clamp is attached to the second floating sheave;
a fixed point; and
a winching element, attached to the winch of the second winch system and to the fixed point;
wherein the winching element is routed from the winch of the second winch system,
around the second floating sheave, around the first floating sheave and to the fixed point.

9. The system of any of claims 1 to 8,
wherein in a clamping configuration the first clamp is configured to clamp an end of a deployed pipe string, wherein in the clamping configuration the first clamp is configured to move along the guiding system in response to vessel movement in a laying direction, and
wherein in a clamping configuration the second clamp is configured to move along the guiding system in response to vessel movement in a laying direction.

10. A vessel for deploying pipe while moving, the vessel comprising:
a system of any of the claims 1 to 9.

11. The vessel of claim 10, wherein the first and second winch systems are mounted on the vessel.

12. A method of maintaining tension in an S-lay pipeline, the method comprising:
providing a system according to any of claims 1 to 9, wherein the first and/or second clamp is supporting a pipe string: and
in response to a surge event rendering both the first and second clamp to substantially maintain the tension in the pipe string.
